# EUROPEAN PATENT APPLICATION

(11) **EP 1 548 588 A2**
(43) Date of publication of application: **29.06.2005**
(21) Application number: 04106653.1
(22) Date of filing: 16.12.2004
(51) Int. Cl.: G06F 9/45

(54) **Method of translating computer program code, communications system and network management entity therefor**

(30) Priority: 18.12.2003 GB 0329246
(71) Applicant: Agilent Technologies Inc, Palo Alto, CA 94303-0870 (US)
(72) Inventor: Mitchell, Kevin, EH30 9TG, South Queensferry (GB)
(74) Representative: Coker, David Graeme

(57) **Abstract**

In a communications network, it is necessary to provide a network management system software application to manage devices attached to the network. Known techniques for relating source code classes of the application to managed objects relating to Management Information Bases (MIBs) of a managed device, such as so-called MIB compilers, attempt to provide such relationships, but generate the relationships in an MIB-centric way, resulting in loss of semantic context and the provision of redundant fields. The present invention, provides, in one embodiment, an object code enhancer (204) arranged, through use of mapping data (206, 208), to supplement object code generated by a compiler (202) with network management protocol calls capable of generating a desired relationship between a source code-generated class and one or more managed objects of a managed device (106, 108, 110). Source code is therefore uncluttered by network management calls and the classes created by a programmer are more natural in nature than the relationships generated by the MIB compiler.

## Description

### Technical Field

The present invention relates to a method of translating computer program code of the type, for example, generated by a compiler, such as a Java compiler, in which Java byte code is enhanced. The present invention also relates to a communications system of the type, for example, comprising a plurality of network devices, such as a router, and a network management entity. The present invention further relates to the network management entity for the communications system.

### Background Art

A managed communications network, for example, a computer network, such as the Internet, typically comprises three main types of component: managed devices, software agents and Network Management Systems (NMSs).

A managed device, for example, a router, switch, hub, host computer or printer, constitutes a node in the communications network, and is sometimes referred to a network element. The managed device comprises a software agent. In addition to a primary function or functions of the managed device, the managed device collects and stores information pertinent to the management of the communications network, the management information being made available to the NMSs.

The software agent, to which reference has just been made above, is a software module supported by the managed device for the purpose of network management. The software agent has knowledge, on a local basis, of the management information and is capable of translating the management information into a form compatible with a so-called Simple Network Management Protocol (SNMP). The SNMP is an application layer protocol that is part of the Transmission Control Protocol/Internet Protocol (TCP/IP) suite. The SNMP facilitates communication of the management information between network devices in order to enable management of network performance, identification and resolution of network problems, and planning of future network growth.

An NMS comprises a plurality of network applications for monitoring and controlling the managed devices. The communications network typically comprises at least one NMS, depending upon the number of managed devices in the communications network.

The management information is typically specified and stored hierarchically as a so-called Management Information Base (MIB). The MIB comprises managed objects that are identified by object identifiers, the MIB being accessed by a network management protocol, such as the SNMP. Using the SNMP, the managed device can export views of the current state of the managed device represented by the MIB. Some MIB fields are writeable, allowing the NMS to reconfigure aspects of a behavior of a managed device remotely using the SNMP. Also, the NMS can register an interest in various events that might occur within the managed device. Occurrences of the various events can then be signaled back to the NMS using a "trap" command of the SNMP. Such traps are specified in the MIB definitions for the managed device.

One approach to accessing the MIB data from the NMS involves the generation of generic interfaces, as typified by libraries such as SNMP++, written for certain computer languages, such as C++ and Java® (Sun Microsystems, Inc.). Such libraries are essentially wrappers that lie on top of the basic SNMP. Since the SNMP usually uses a User Datagram Protocol (UDP) to deliver packets, the basic SNMP provides no guarantee of delivery of the packets. Whilst tools such as SNMP++ provide some support for error handling and message retransmission, thereby hiding the unreliable transport mechanism from a software programmer, many details of the SNMP, such as Protocol Data Units (PDUs), value bindings and Object IDentifiers (OIDs), are explicitly represented in an Application Program Interface (API) for the plurality of network applications, and must be manipulated by the programmer.

Furthermore, tables are an essential component of many MIBs. One known table, the so-called "ifTable", has multiple rows, one for each physical or virtual interface of the managed device, such as a router and, for each row, multiple columns containing details of the current state and performance of the interface relating to the respective row.

In object-oriented programming terms, an NMS that manipulates interface information might represent each row by an instance of an interface class, but responsibility for creating such instances, initialisation of the instances with appropriate data from the MIBs, and management of the caching of such data, where appropriate, and other activities, is left to the programmer. In some cases, even a simple task, such as loading a complete table, can be problematic, the size of an SNMP packet being limited, and there therefore being no guarantees that data for complete rows will be returned in a single SNMP packet; tedious reassembly, on arrival, of all of the data for the complete row is therefore sometimes necessary. Whilst such an approach is flexible and simple and so most data manipulations can be achieved, a great deal of effort is required on the part of the programmer.

In order to overcome this drawback, approaches based upon MIB compilers have been developed. In simplistic terms, an MIB compiler analyses an MIB specification and uses the results of the analysis to generate or support MIB-specific tools. For example, in one variant of this approach, the MIB compiler is part of a fixed application, for example, an MIB browser. The MIB definitions allow the browser to impose some structure and meaning on what would otherwise be just an ordered tree of values. The information gleaned from the MIB specification allows the MIB browser to identify, for example, tables, writeable fields, and/or enumerated types. However, the MIB browser typically provides very limited, or in many case no, programmatic interface to the MIB data. In this respect, an Operational Support System (OSS) usually has more demanding needs than a simple MIB browser, requiring much more control over the MIB data being displayed and manipulated.

Consequently, in another variant of the above mentioned approach, some MIB compilers, for example a mibgen MIB compiler written by (Sun Microsystems, Inc.), compile the MIBs into Java or C++ classes. Each MIB table of the managed device is translated into a table-specific class, each column in the table being mapped to a field within the table-specific class. This technique provides some flexibility in how the mapping operation is carried out, resulting in each MIB compiler of this type generating slightly different class definitions for each MIB. For example, the mibgen MIB compiler generates so-called "managed beans" for each MIB table.

Whilst MIB compilers ameliorate interaction between the programmer and the SNMP, MIB compilers suffer from a number of disadvantages. In this respect, the process of compilation of the MIBs is driven by the MIBs, and so code generated in response to a given MIB mimics the structure of the given MIB. In some cases, a most natural definition of a class from a perspective of an application is a poor match with the table-specific class generated from the MIB, because an entry in an MIB table may contain many columns that are of no relevance to a particular application. Additionally, loading values corresponding to the irrelevant columns from the managed device is wasteful, and continual specification of values that should be loaded is inconvenient. Also, MIB tables frequently have columns, the values of which act as keys for other MIB tables; MIB compilers usually do not capture such relationships, because the relationships are typically expressed as a comment attached to the relevant fields in the MIB specification. MIB compilers do not allow modeling of such relationships by one-to-one or one-to-many fields in the table-specific classes generated. Even simple fields can have data types generated by the MIB compiler that might be better modeled in an application by a more specific data type.

Customization is also a common problem associated with using tool-generated classes. The table-specific classes generated by the MIB compiler capture most of the syntactic structure of the MIB elements, but very little semantic content is captured. Consequently, an application has to augment the code generated by the MIB compiler with hand-written methods to supply the semantic content.

One technique for providing the semantic content involves the programmer embedding, or including, class-specific code fragments into the code generated by the MIB compiler. However, such code fragments can be hard to understand and maintain in isolation.

Another technique involves making use of inheritance to add functionality. The MIB compiler generates base classes that contain structural information, and then the programmer derives classes from the base classes that supplement the base classes with the semantic content required. Whilst this technique can work when all table instances are generated explicitly by user-written source code, it is desirable to create some instances implicitly by the code generated by the MIB compiler, for example, when following a relationship from one table instance to another. In such cases, the bookkeeping involved in making sure instances of the appropriate type are created can become problematic, due to the need to instruct the MIB compiler in greater detail with respect to mappings from user-generated sub-classes to MIB generated super-classes.

In principle, many of the above-described disadvantages can be obviated or mitigated by providing the MIB compiler with a potentially large number of configuration options to control and guide the code generated by the MIB compiler. However, existing MIB compilers are fairly primitive in this respect and do not possess such capabilities. Additionally, as mentioned above, an emphasis is placed on the wrong component; an MIB compiler generates a class representation driven by the structure of the MIB, the class representation needing to be subsequently manipulated into a form that is more appropriate for the application than the class representation generated. Furthermore, the MIB compiler approach suffers from a more subtle deficiency than hitherto described herein.

When implementing an OSS, it is typically desirable to respond to events by updating state information in a database and also to configure one or more managed devices via their respective MIBs. In this respect, the MIBs represent just another form of persistent state. However, an event handler that changes multiple fields in the database, and some configuration states in the one or more managed devices, should often be treated atomically; making some changes, whilst others fail, can quickly lead to an inconsistent state. Unfortunately, the SNMP provides minimal, or non-existent, support for transaction-like behavior depending on the MIBs being accessed.

### Disclosure of Invention

According to a first aspect of the present invention, there is provided a method of translating computer program code, the method comprising the steps of: reading input code comprising a first data object conforming to a first class; reading configuration data comprising class mapping data; and implementing a mapping from the first class to a second class by supplementing the input code with code fragments, the code fragments comprising at least one network management protocol call.

The network management protocol may be a Simple Network Management Protocol (SNMP).

The input code may be object code. A compiler may generate the object code. The object code may comprise object code fragments. The object code fragments may be Java object code fragments.

The code fragments may further comprise at least one database call. The database calls may be in accordance with a JDBC protocol. The database call may be provided as a result of a Java Data Objects (JDO) enhancement.

The first data object may be user-defined. The first data object may also correspond to a parameter of a network device, for example, a router, switch, hub, access server, bridge, host computer or printer.

The network management call may be arranged to get a state of an object of a network device.

The network management call may be arranged to set a state of an object of a network device.

The object of the network device may be a Management Information Base (MIB) object.

The input code may be further supplemented by support for transactions. At least initially, whilst limited network protocol support for transactions exists, at least partial support for transactions may be provided, for example, modifications with respect to a single network device.

According to a second aspect of the present invention, there is provided a method of enhancing computer program code comprising the method of translating computer program code as set forth above in relation to the first aspect of the present invention.

According to a third aspect of the present invention, there is provided a computer program element comprising computer program code means to make a computer execute the method as set forth above in relation to the first and/or second aspect of the present invention.

The computer program element may be embodied on a computer readable medium.

According to a fourth aspect of the present invention, there is provided a network management entity comprising: an application arranged to communicate, when in use, data with at least one of a plurality of network devices using a first data object conforming to a first class; wherein the application comprises object code supplemented by code fragments, the code fragments comprising at least one network management protocol call to communicate the data with a second data object conforming to a second class.

According to a fifth aspect of the present invention, there is provided a communications system comprising: a plurality of network devices; and a network management entity as set forth above in relation to the fourth aspect of the present invention.

According to a sixth aspect of the present invention, there is provided a use of a computer program code translator to map a first data object of a first application programmer-defined class to a second class comprising at least one network management protocol call.

It is thus possible to provide a method of translating computer program code that decouples writing of the computer program code from MIB binding. Consequently, software application development is simplified, because intricacies associated with communicating network management data are hidden from the software programmer and source code written by the programmer is not polluted with MIB details. Additionally, the absence of support for transactions is at least mitigated by supplementing the input code with the code fragments, whilst transactional context is hidden from a large proportion of the program code, as are network management protocol session objects. By providing an approach centred about generation of application-specific classes and then providing necessary code fragments to provide a correspondence with an MIB, it is only necessary for the programmer to model those features of a network device that are of interest to an application. Consequently, efficiency is increased, because the programmer does not have to define fields of a table that are not relevant to the application and hence time is save by not loading values relating to irrelevant fields. Additionally, it is possible to define classes with fields from multiple MIBs. Furthermore, it is possible to control the fields that are loaded initially and the fields that are loaded lazily. Also, batch fetches and updates of field data are more easily achievable by the programmer than by using known implementations, and states of network devices can be queried using a natural syntax. The present invention provides a more natural mapping of many MIB tables than current class generation techniques, without a need to add user-code to machine generated classes, whilst providing an application with an ability to adapt to changes in MIB structures. In particular relation to translation of object code, such as by enhancement, the source code is simpler by not being cluttered by auto-generated code. Also, efficiency in source code generation is improved, because syntax errors are identified prior to compilation.

### Brief Description of Drawings

At least one embodiment of the invention will now be described, by way of example only, with reference to the accompanying drawings, in which:
**Figure 1** is a schematic diagram of a communications network having an element running a Network Management System application;
**Figure 2** is a schematic diagram of elements employed to generate the application of Figure 1; and
**Figure 3** is a flow diagram of a method of generating the application of Figure 2.

### Detailed Description

Throughout the following description identical reference numerals will be used to identify like parts.

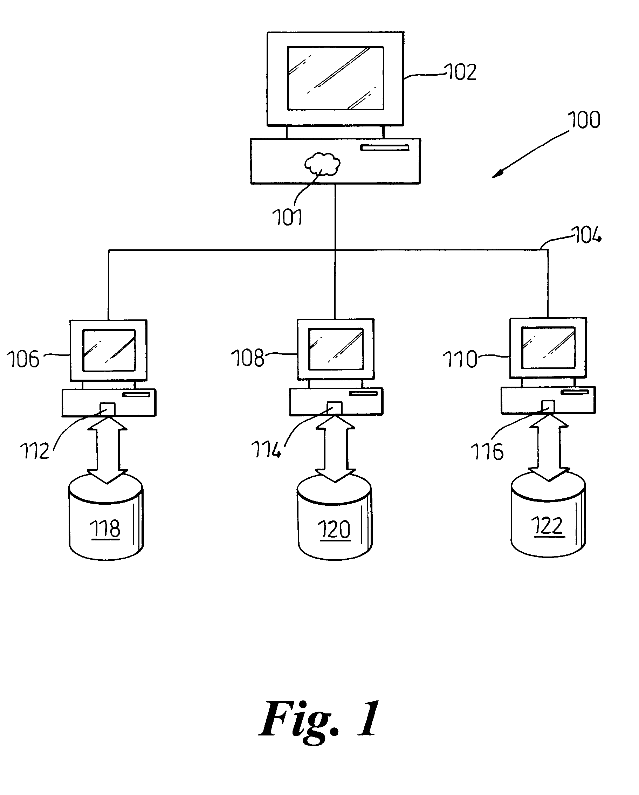

Referring to Figure 1, a communications system 100 comprises a Network Management System (NMS) software application 101 supported by a workstation 102, for example, a Personal Computer (PC). The workstation 102 is coupled to a communications network 104, for example, a Local Area Network (LAN), or a Wide Area Network (WAN), such as the Internet. In this example, a first managed device 106, a second managed device 108 and a third managed device 110, sometimes referred to as "network elements", are respectively coupled to the network 104. It should be understood that a fewer or greater number of managed devices, or network elements, can be coupled to the network 104 than described above.

The first, second and third managed devices 106, 108, 110 support a first software agent 112, a second software agent 114, and a third software agent 116, respectively. The first, second and third software agents are network managed software modules, the structure of which is known in the art and so, for the purposes of simplicity and clarity of description, will not be described further. The first, second and third agents 112, 114, 116 are arranged to access a first management database 118, a second management database 120 and a third management database 122, respectively.

The first, second and third management databases 118, 120, 122 are supported by the first managed device 106, the second managed device 108 and the third managed device 110, respectively, and each the first, second and third management databases 118, 120, 122 comprise at least one Management Information Base (MIB). In the art of communications networking, MIBs are know and it should be appreciated that each of the first, second and third managed devices 106, 108, 110 can comprise any suitable MIB(s) appropriate for the first, second and third managed devices 106, 108, 100 operating in the communications network 104.

Through managed objects, it is possible to obtain a status of a given managed device and set a property, or behaviour, of the given managed device. A managed object relates to one or more characteristics of the given managed device possessing the given managed object. The managed object corresponds to a part of a given MIB for the managed device. In this example, the first, second and third managed devices 106, 108, 110 each comprise a number of managed objects.

In order for the NMS to be able to access and/or set instances of managed objects, the NMS and the first, second and third agents 112, 114, 116 communicate in accordance with a Simple Network Management Protocol (SNMP). The SNMP is also known in the art and so will not be described further herein.

For the purposes of the present description, an exact functionality and structure of the NMS application 101 is not important, because the structure and functionality will vary between work products created by software developers depending, inter alia, upon the network environment in which the NMS application 101 is to run. Nevertheless, pseudo-code example code fragments corresponding to actual code fragments of source code of the NMS application 101 are set out below in order to better illustrate the utility of the technique subsequently described herein for generating, from the source code, byte code constituting the NMS application 101.

In the present example, the NMS application 101 is written in the Java language, but other suitable programming languages can, of course, be employed. Particular examples herein relate to access and/or modification of instances of classes requiring SNMP calls, but the following examples also support combinations with other persistent data objects stored in one or more database. For the purposes of clarity and simplicity of description, the following examples will be described in the context of the first managed device 106 being a router, having interfaces.

In order to represent, and ultimately access and manipulate, managed objects, the NMS application 101 has defined classes to represent the router and the interface, but to avoid over-complicating the source code of the NMS application 101 with redundancy, only attributes of the router and the interface that are relevant to the NMS application 101 are defined. An example of a pseudo-source code fragment defining the router and interface classes is:

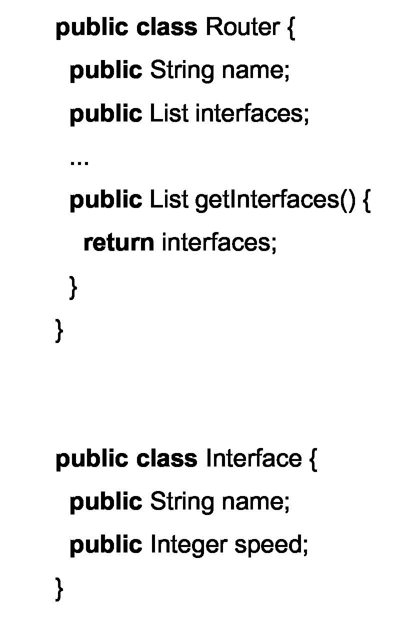

In order to manipulate the router and interface classes defined above, the source code of the NMS application 101 comprises source code fragments that, when executed at a lower level, retrieve respective states of instances of the router class or interface class. In the context of managed devices, the SNMP needs to be employed at some level in order access and/or manipulate the instances of the router and/or interface classes. However, in the present example, SNMP calls do not feature in the source code of the NMS application 101. Consequently, a fragment of pseudo-source code corresponding to a fragment of the source code for accessing the instance of the router class is:

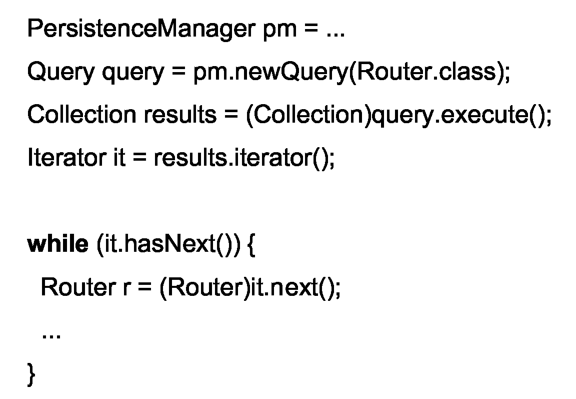

Depending upon the size of the communications network 104, it can be necessary to bound the extent of the newQuery method set out in the above pseudo-source code fragment. Therefore, a separate structure is defined that relates network IP addresses to community strings, i.e. passwords, and Java classes. In order to allow entries to be added and removed from the separate structure, an API is provided to perform this task. The separate structure is then used by the newQuery method to establish a set of SNMP connections, lazily in most cases.

In order to manipulate the instance of the router class from the NMS application 101, the NMS application 101 source code comprises code corresponding to the following exemplary pseudo-source code fragment:

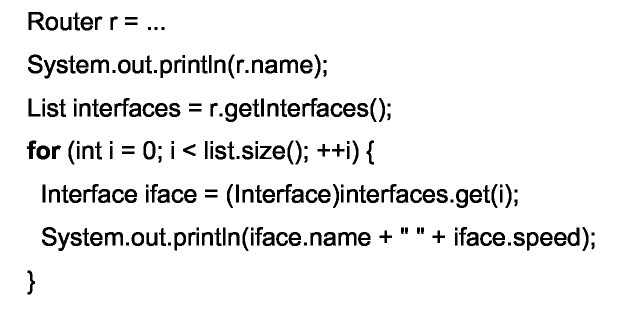

The above pseudo-source code fragment examples are not complicated by SNMP calls associated with accessing and manipulating managed objects of the first managed device 106. The capability to access and manipulate the managed objects of the first managed device 106 is instead, in this example, provided by a post-processing technique known as enhancement. The enhancement technique will now be described in greater detail, but it should be appreciated that whilst a post-processing technique is described below, the technique can be adapted to be a pre-processing technique, i.e. applied prior to compilation.

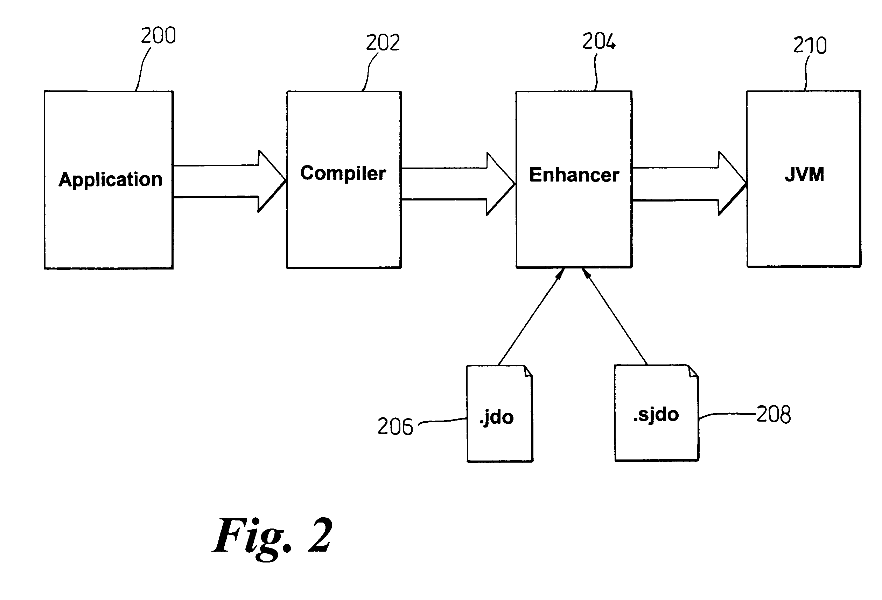

Referring to Figure 2, the NMS application 101 is, of course, initially formed from the source code 200. Since the source code 200 is in the Java language, a Java compiler 202 is provided. An enhancer 204 is also provided. The enhancer 204 is a translation program, element or entity, that translates input code, for example object code, using mapping data to supplement the input code with code fragments to support access and/or modification of data objects through a network management protocol and/or a database protocol. In the present example, the enhancer 204 is written in the Java language, but any other suitable programming language can be used. The enhancer 204 has access to a first mapping file 206 and a second mapping file 208, the first mapping file 206 identifying persistent classes and fields and the second mapping file 208 containing mapping information relating to mappings of fields to the first managed device 106 and/or a database. In this example, the first and second mapping files 206, 208 are written in extensible Markup Language (XML). Additionally, the workstation 102 supports a Java Virtual Machine (JVM) (Sun Microsystems, Inc.) 210 for executing Java byte code.

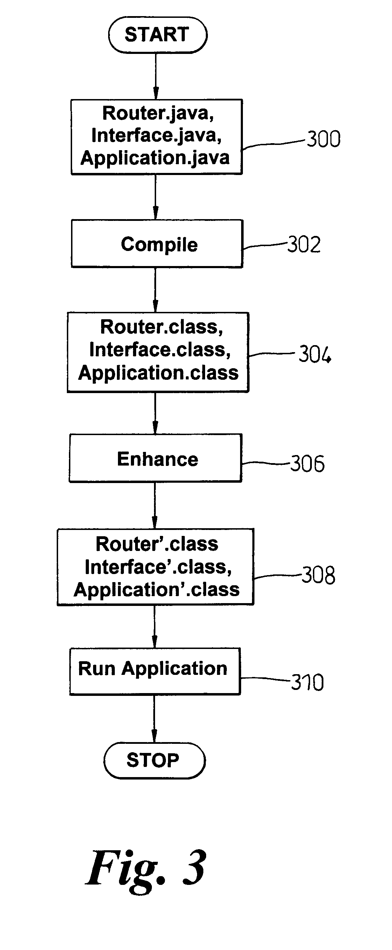

In operation (Figure 3), the source code 200 is written (step 300), and saved as an application file, application.java. Definitions for the router and interface classes aare also written and saved as a separate, first, router.java file and a separate, second, interface.java, file, respectively. The application file and the class definition files application.java, router.java, interface.java are then compiled (step 302) by the Java compiler 202. The compiler 202 generates object code in the form of byte code, as is known in the art, the byte code being stored as object code files in accordance with the normal operation of Java compilers. Consequently, a first class file, router.class, a second class file, interface.class, and a third class file application.class are generated (step 304) by the Java compiler 202.

The enhancer 204 then loads the object code class files router.class, interface.class, application.class and begins enhancing (step 306) the object code files router.class, interface.class, application.class with SNMP calls and/or SNMP calls combined with database calls. The enhancer 204 supplements the byte code generated by the Java compiler 202 by modifying the class files to produce a replacement set of class files (step 308) router'.class, interface'.class, application'.class. These modifications to the class files router.class, interface.class, application.class are driven by the first and second mapping files 206, 208.

As an example, in relation to the newQuery method described above, which returns instances of the router class, an implementation of the newQuery method requires the state of the instance of the router class to be initialized to reflect a current state of the managed device using SNMP calls. It is necessary to pre-fetch some attribute values of the instance of the router class in order to minimise the number of so-called SNMP "get" calls. Other attributes, particularly sizeable ones, can be retrieved subsequently on an on-demand basis.

In order to be achieve retrieval of values from the first managed device 106, via the SNMP, object IDs (OIDs) corresponding to each attribute to be retrieved are used as part of a mapping. For example, a name attribute of the Router class is bound to the sysName object of an SNMPv2 MIB of the first managed device 106 using the OID "1.3.6.1.2.1.1.5". In the present example, this mapping information is stored in the second mapping file 208 having a .sjdo file extension. Alternatively, since JDO objects are also being employed in this example to support other persistent objects not described herein, the mapping information can be provided as additional attributes of the first mapping file 206, having a .jdo file extension. Consequently, the second mapping file 208 comprises the following pseudo-XML code fragment.

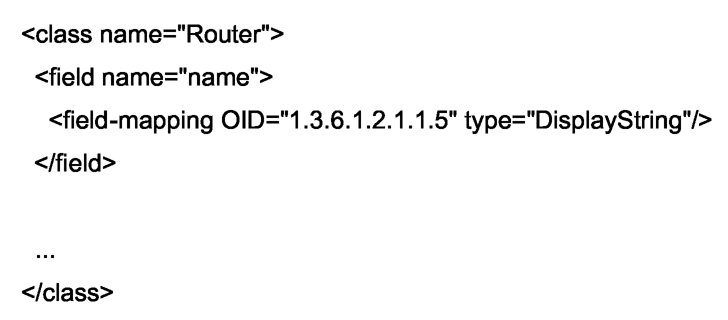

In order to implement a relation, such as a mapping from the router class to the interface class, the XML code corresponding to the following pseudo-XML code fragment is used.

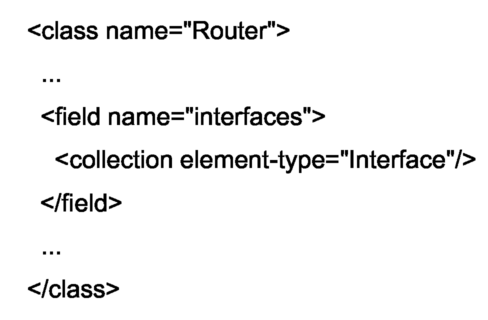

However, since MIBs are essentially data trees, it is also necessary to specify a root of the MIB tree representing all the interfaces to be accessed and/or manipulated, i.e. 1.3.6.1.2.1.2.2, in this example, and so the pseudo-XML code is modified to:

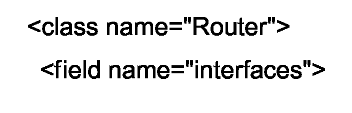

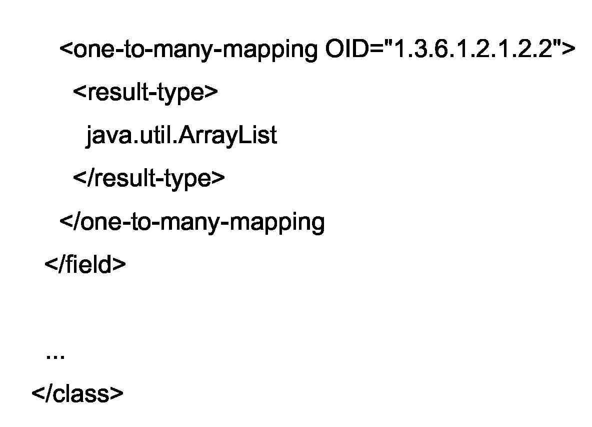

The enhancer 204 generates code to walk the MIB from this point, just like you would do in a manual implementation. Any access to the interfaces property of a Router instance would be replaced by a call to walk the MIB, or a cache access. Whether the entire MIB was walked, or this was done lazily as the list was traversed, would be an implementation decision.

In relation to the interface class, the second mapping file 208 comprises an XML code fragment corresponding to the following pseudo-XML code fragment.

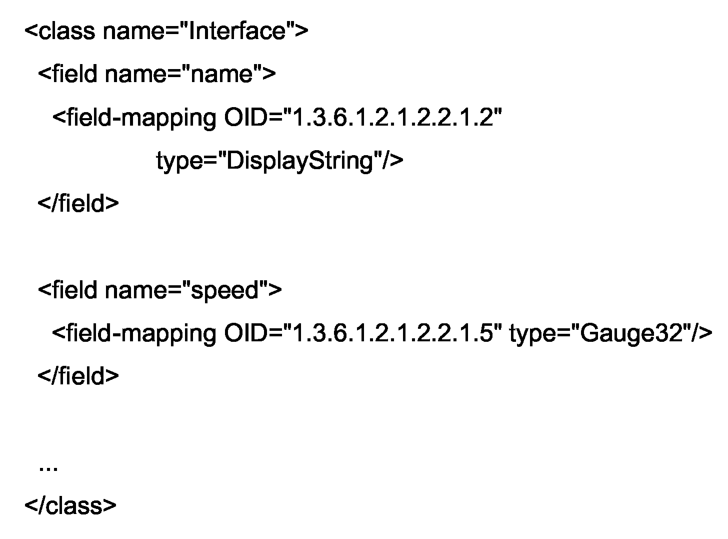

For the interface class example above, the enhancer 204, using the first and second mapping files 206, 208, replaces accesses to the name and speed properties by calls that query the application's cache (not shown) and, if necessary, SNMP calls to access the name and speed properties from the first managed device 106.

As there are many different ways of expressing mappings from Java classes to SNMP MIBs, it should be understood that the above examples can be modified and only represent a subset of conceivable mapping possibilities. In this respect, the sophistication and expressiveness of the mapping process is one area that distinguishes writers, i.e. vendors, or the source code for the NMS application 101. Consequently, by providing the first and second mapping files 206, 208, different mappings can be achieved from custom-written classes in the source code to various communications networks having different MIB structures.

Once the enhancer 204 has enhanced the class files, the supplemented, or enhanced, byte code generated is executed (step 310) by the JVM 210 supported by the workstation 102 to provide the NMS.

Alternative embodiments of the invention can be implemented as a computer program product for use with a computer system, the computer program product being, for example, a series of computer instructions stored on a tangible data recording medium, such as a diskette, CD-ROM, ROM, or fixed disk, or embodied in a computer data signal, the signal being transmitted over a tangible medium or a wireless medium, for example, microwave or infrared. The series of computer instructions can constitute all or part of the functionality described above, and can also be stored in any memory device, volatile or non-volatile, such as semiconductor, magnetic, optical or other memory device.

## Claims

**1.** A method of translating computer program code, the method comprising the steps of:
reading input code (304) comprising a first data object conforming to a first class;
reading configuration data comprising class mapping data; and
implementing a mapping from the first class to a second class by supplementing (306) the input code with code fragments, the code fragments comprising at least one network management protocol call.

**2.** A method as claimed in Claim 1, wherein the input code is object code.

**3.** A method as claimed in Claim 1 or Claim 2, wherein the code fragments further comprise at least one database call.

**4.** A method as claimed in any one of the preceding claims, wherein the network management call is arranged to get a state of an object of a network device.

**5.** A method as claimed in any one of the preceding claims, wherein the network management call is arranged to set a state of an object of a network device.

**6.** A method of enhancing computer program code comprising the method of translating computer program code as claimed in any one of the preceding claims.

**7.** A computer program element comprising computer program code means to make a computer execute the method as claimed in any one of the preceding claims.

**8.** A computer program element as claimed in Claim 7, embodied on a computer readable medium.

**7.** A network management entity (102) comprising:
an application (101) arranged to communicate, when in use, data with at least one of a plurality of network devices (106, 108, 110) using a first data object conforming to a first class; wherein
the application (101) comprises object code supplemented by code fragments, the code fragments comprising at least one network management protocol call to communicate the data with a second data object conforming to a second class.

**8.** A communications system (100) comprising:
a plurality of network devices (106, 108, 110); and
a network management entity (102) as claimed in Claim 7.

**9.** A use of a computer program code translator to map a first data object of a first application programmer-defined class to a second class comprising at least one network management protocol call.
